# EUROPÄISCHE PATENTSCHRIFT

(11) **EP 2 598 350 B1**
(45) Veröffentlichungstag und Bekanntmachung des Hinweises auf die Patenterteilung: **29.10.2014**
(21) Anmeldenummer: 11723945.9
(22) Anmeldetag: 01.06.2011
(51) Int. Cl.: B60G 17/04

(54) **VERFAHREN ZUR STEUERUNG EINES KOMPRESSORS**
METHOD FOR CONTROLLING A COMPRESSOR
METHODE DE CONTROLE D'UN COMPRESSEUR

(30) Priorität: 29.07.2010 DE 102010036744
(43) Veröffentlichungstag der Anmeldung: 05.06.2013
(73) Patentinhaber: Continental Teves AG & Co. oHG, 60488 Frankfurt (DE)
(72) Erfinder: ENGELHARDT, Marek, 36289 Friedewald (DE)
(86) Internationale Anmeldenummer: PCT/EP2011/059116
(87) Internationale Veröffentlichungsnummer: WO 2012/013399

(56) Entgegenhaltungen:
- EP-A2- 0 941 876
- EP-A2- 1 253 321

## Beschreibung

Die Erfindung betrifft ein Verfahren zur Steuerung eines Kompressors einer Druckluftversorgung in einer Fahrzeugluftfederung, bei dem der Kompressor je nach Luftbedarf der Fahrzeugluftfederung und unter Berücksichtigung einer vorgegebenen zulässigen Kompressortemperatur (Kompressor-Grenztemperatur) T_{G} von einer Luftfedersteuerung ein- und ausgeschaltet wird, bei dem die Kompressortemperatur in einem vorhandenen, tatsächlichen oder zu erreichenden, geplanten Betriebszustand der Fahrzeugluftfederung mit einem Temperaturmodell berechnet wird. Dabei wird der Kompressor in den Fällen, in denen die mit einem Temperaturmodell berechnete Kompressortemperatur eine vorgegebene zulässige Kompressortemperatur T_{G} überschreitet, zur Abkühlung ausgeschaltet, z. B. für einen ebenfalls nach einem Temperaturmodell zu berechnenden Zeitraum, oder aber in einer anderen Betriebsart weiter betrieben, z.B. in einer getakteten Betriebsart.

Unter dem Begriff "Betriebszustand" wird hier jedwede aus zusammenwirkenden pneumatischen und elektronischen Regelfunktionen sich ergebende Funktion einer Luftfederungsanlage verstanden, also etwa das Auffüllen des Speichers bei einer geschlossenen Niveauregelungsanlage bzw. Luftfederungsanlage, das Auffüllen der Luftfedern von offenen oder geschlossenen Niveauregelungsanlagen zur Veränderung der Fahrzeughöhe, das Ablassen von Luft aus Speicher oder Luftfedern, das Durchströmen und Regenerieren des Trockners usw.

Die Betriebsart eines Kompressors beschreibt die spezielle Ausbildung des Kompressorlaufs bzw. -betriebs etwa als ununterbrochenes Pumpen, als intermittierendes Pumpen, als Lauf unter Volllast mit höchstem Gegendruck, als Leerlauf etc.

Bei dem Begriff "Temperaturmodell" im Sinne der Anmeldung handelt es sich um ein Rechenmodell, mit dem unter Verwendung von Parametern wie Vor- und Gegendruck am Kompressor, Geometrie- und Bauteilausbildungen, Kühlung durch Fahrtwind, Batteriespannung, Umgebungsdruck etc. der Temperaturanstieg bzw. die Temperaturabnahme der Luft in dem Kompressor berechnet werden kann, ohne einen Sensor oder Temperaturfühler am Kompressor anzubringen.

Das aus der DE 196 21 946 C1 bekannte Verfahren zur Steuerung bzw. Regelung eines bedarfsabhängig ein- und ausschaltbaren Kompressors lässt sich ohne Temperaturfühler durchführen, da in der Steuereinheit lediglich Schätzwerte für die Temperatur des Kompressors berechnet werden. Darüber hinaus wird der Kompressor der Luftfederung durch das Verfahren zuverlässig vor zu hohen Temperaturen geschützt, so dass eine Schädigung des Kompressors weitestgehend auch bei unsachgemäßer Betätigung der Luftfederung ausgeschlossen ist. Es ist jedoch festzustellen, dass der obere Temperaturschwellwert immer während eines Regelvorgangs erreicht bzw. überschritten wird und dass der Regelvorgang durch die Steuereinheit dann abgebrochen wird. Das bedeutet, dass der Regelvorgang nicht oder erst mit starker Zeitverzögerung abgeschlossen wird, nämlich nach der Abkühlung des Kompressors unterhalb des unteren Temperaturschwellwertes. Da die Kompressoren einer Luftfederung aus akustischen Gründen und zum Schutz vor mechanischen Belastungen in den meisten Fällen gut gekapselt sind, kann die Abkühlzeit einige Minuten bis zu einer Viertelstunde in Anspruch nehmen. Eine derartig lange Unterbrechung bzw. Verzögerung des Regelvorgangs ist unbefriedigend

Die DE 10 2006 039 538 A1 offenbart ein Verfahren zur Steuerung eines bedarfsabhängig ein- und ausschaltbaren Kompressors einer Luftfederungsanlage eines Kraftfahrzeuges, bei dem die Temperatur der in dem Kompressor verdichteten Luft während der Laufzeiten des Kompressors mit einem Temperaturmodell berechnet und bei dem für den ersten Lauf des Kompressors ein anderes Temperaturmodell zugrunde gelegt wird als für die nachfolgenden Läufe des Kompressors, was zu einer Verlängerung der ersten Laufzeit des Kompressors gegenüber den nachfolgenden Laufzeiten führt. Damit können mehr Regelvorgänge bis zum Ende durchgeführt werden, aber eben auch längst nicht alle.

Eine besondere Problematik entsteht immer dann, wenn eine Befüllung des Niveauregelsystem durch den Kompressor erforderlich ist oder war, um die für das System nötige Luftmenge bereitzustellen und der Kompressor dabei bis nahe seiner zulässigen Kompressor-Grenztemperatur belastet worden ist. Wenn dann zusätzlich oder auch kurz danach eine Änderung der Fahrzeughöhe gewünscht wird, beispielsweise zur Einfahrt in einen Geländekurs oder nach erfolgter größerer Zuladung, stellt nach dem Stand der Technik das mitlaufende Temperaturmodell fest, dass der Regelwunsch "Änderung der Fahrzeughöhe" nicht durchgeführt werden kann, ohne im Verlauf des dazu nötigen Kompressorbetriebs die zulässige Kompressor-Grenztemperatur zu überschreiten. Damit wird dem Regelwunsch nicht stattgegeben und das Einschalten des Kompressor wird durch die Steuerung "gesperrt". Der Fahrer muss ggf. mehrere Minuten warten, bis der Kompressor soweit abgekühlt ist, dass die Höhenänderung durchgeführt werden kann, ohne dass die zulässige Kompressor-Grenztemperatur überschritten wird. Dies ist für den Fahrer unbefriedigend, vermutetet er doch, dass seine Niveauregelungsanlage bzw. Luftfederungsanlage nicht richtig arbeitet.

In EP 1 253 321 A2 wird die Druckmittelförderung ausgeschaltet, wenn ein Temperatursignal einen Temperaturgrenzwert überschreitet, der in Abhängigkeit von dem von der Druckmittelanlage verursachte Gegendruck festgelegt wird. Eine Weiterbildung von diesem Verfahren sieht zwei Temperaturgrenzwerte vor, die bestimmten Betriebsarten des Kompressors oder der Druckmittelanlage zugeordnet sind. Hierbei erfolgt auch ein wechselweises Aus- und Wiedereinschatten des Kompressors um einen bestimmten Betriebszustand zu bedienen.

Für die Erfindung bestand daher die Aufgabe, ein Verfahren zur Steuerung eines Kompressors einer Druckluftversorgung in einer Fahrzeugluftfederung zu schaffen, bei dem einerseits alle Bauteile des Kompressors gut vor Schäden aufgrund einer zu großen Wärmeentwicklung geschützt sind und andererseits verschiedene gleichzeitige oder nacheinander erfolgende Regelungswünsche, d.h. Wünsche für das Erreichen bestimmter Betriebszustände, möglichst ohne Wartezeiten durchgeführt werden können.

Gelöst wird diese Aufgabe durch die Merkmale des Hauptanspruchs. Weitere vorteilhafte Ausbildungen sind in den Unteransprüchen offenbart.

Dabei werden als Parameter im Steuerprogramm mindestens zwei verschiedene zulässige Kompressortemperaturen T_{G1} und T_{G2} vorgegeben, von denen die zulässige Kompressortemperatur T_{G2} größer als die zulässige Kompressortemperatur T_{G1,} ist. Die zulässige Kompressortemperatur T_{G1} ist für einen ersten Betriebszustand B_{Z1} der Befüllung der Fahrzeugluftfederung und die zulässige Kompressortemperatur T_{G2} ist für einen weiteren Betriebszustand B_{Z2} der Befüllung der Fahrzeugluftfederung vorgeben. In dem Fall, dass der Kompressor unter Vorgabe der zulässigen Kompressortemperatur T_{G1} bereits eingeschaltet ist oder war, um den ersten Betriebszustand B_{Z1} zu erreichen und während dieser Einschaltperiode oder während einer nachfolgenden Abkühlphase des Kompressors eine von außen, d.h. etwa vom Fahrer gestellte Anforderung an die Fahrzeugsteuerung erfolgt, den zweiten Betriebszustand B_{Z2} zu erreichen, der Kompressor unter Vorgabe der zulässigen höheren Kompressortemperatur T_{G2} weiter betrieben oder wieder eingeschaltet wird. Eine nachfolgende Abkühlphase könnte beispielsweise durch Überschreitung der zulässigen Kompressortemperatur T_{G1} und der dadurch ausgelösten Abschaltung des Kompressors eingeleitet worden sein.

Bei dem erfindungsgemäßen Verfahren ist es damit möglich, den Kompressor zur Durchführung von Regelungswünschen auch dann zu nutzen, wenn die Durchführung anderer Aufgaben bereits einen Kompressorbetrieb erfordern oder erforderten, der den Kompressor bis zur Grenztemperatur T_{G1} beanspruchen würde. Man erhält dadurch sozusagen eine "Laufzeitreserve" für den Kompressor.

Eine vorteilhafte Weiterbildung besteht darin, dass der ersten Betriebszustand B_{Z1} eine Speicherfüllung einer geschlossenen Luftfederungsanlage und der weitere Betriebszustand B_{Z2} eine Höhenänderung des Fahrzeugs ist. Damit lässt sich während und nach einer Speicherbefüllung auch eine Höhenänderung des Fahrzeugs nach Fahrerwunsch einschalten. Bei der der Steuerung des Kompressorbetriebs in einem Niveauregelsystem nach dem Stand der Technik steht der Kompressor demgegenüber nach einer Speicherbefüllung meistens nicht mehr für einen anschließenden Niveauregelvorgang zur Verfügung. Wenn der Fahrer einen Regelvorgang über das Bedienteil anfordert, wird er im Stand der Technik durch die Anzeige im Armaturenbrett darauf hingewiesen, dass eine Regelung momentan nicht möglich ist.

Der Kunde bzw. Fahrer kann jederzeit eine Regelung durchführen und muss keine Wartezeit bei der Ausführung dieser Regelung in Kauf nehmen. Besonders in den Situationen, in denen das Fahrzeug gerade gestartet worden ist, beim so genannten "Klemme 15-Wechsel" und in denen bei Feststellung eines Druckverlust/Mengenverlustes eine obligatorische Speicherbefüllung erfolgt, ist dies ein entscheidender Vorteil in Hinsicht auf Kundenzufriedenheit.

Der Kompressorbetrieb wird sozusagen aufgeteilt in einen "Hintergrundbetrieb", d.h. die Befüllung, die vom Kunden allgemein nicht registriert wird, und in einen kundenrelevanten Betrieb, d.h. in den "Höhenregelungswunsch". Durch ein solches Einführen unabhängiger Abschalttemperaturen, d.h. zulässigen Kompressortemperatur T_{G1} und T_{G2} innerhalb des Temperaturmodells, nämlich T_{G1} für die Hintergrundbetriebsart des Kompressors und die höhere T_{G2} für den kundenrelevanten Betrieb, kann gewährleistet werden, dass ein kundenrelevanter Betrieb fast immer durchgeführt werden kann. Zusätzlich wird bei Anstoßen eines kundenrelevanten Kompressorbetriebs ein momentan auf Grund Abkühlung gesperrter Kompressor sofort frei geschaltet. Dies ist insbesondere dadurch vorteilhaft, dass der Betriebs des Kompressors von seinem Gegendruck und/oder vom Speicherdruck unabhängig ist.

Eine weitere vorteilhafte Weiterbildung besteht darin, dass die zulässige Kompressortemperatur T_{G1} für den ersten Betriebszustand B_{Z1} auf 180° C begrenzt ist, ggf. im Zusammenwirken mit einer Ausbildung, bei der die zulässige Kompressortemperatur T_{G2} für den zweiten Betriebszustand B_{Z2} auf 200° C begrenzt ist. Dies sind Temperaturgrenzen die das erfindungsgemäße Verfahren für die im Augenblick auf dem Markt befindlichen Kompressorbauarten und -materialien sehr gut anwendbar werden lassen.

Mit dem erfindungsgemäßen Verfahren entstehen z.B. in der folgenden Situation keinerlei Probleme mehr:
Wurde am Tag zuvor das Fahrzeug intensiv genutzt, ist die Luft in den Luftfedern auf Grund von Motorwärme, Dämpfer etc. stark erwärmt worden. Eine leichte Erwärmung der Luft im Luftspeicher ist auch feststellbar. Dann wird das Fahrzeug abgestellt und kühlt sich über Nacht ab. Dabei sinkt die vorhandene Luftmenge im System. Die Luft "zieht" sich zusammen.

Am folgenden Tag wird das Fahrzeug wieder in Betrieb genommen. Zunächst wird vom Steuergerät festgestellt, dass zu wenig Luftmenge im System vorhanden ist und eine Speicherbefüllung wird nun gestartet, um die Luftmenge auf das notwendige Maß zu erhöhen. Erreicht der Kompressor nach Prüfung durch das Temperaturmodell tatsächlich oder voraussichtlich die zulässige Kompressortemperatur T_{G1} von 180°C und damit seine Abschalttemperatur, dann würde der Kompressor nach den Verfahren aus dem Stand der Technik für folgende Aktivitäten gesperrt.

Der Kunde hat nun das Fahrzeug in der Zwischenzeit beladen, steigt in das Fahrzeug und möchte nun einen Niveauregelvorgang starten. Nach den im Stand der Technik bisher bekannten Verfahren war der Kompressor dann nicht verfügbar. Dieser musste erst gemäß Temperaturmodell abkühlen und konnte erst danach den gewünschten Regelvorgang ausführen.

Mit dem erfindungsgemäßen Verfahren und damit der Einführung einer zweiten zulässigen Kompressortemperatur T_{G2} innerhalb des Temperaturmodells und das Unterbrechen der Abkühlphase kann der Kompressor sofort vom System genutzt werden. Der Regelvorgang ist im Allgemeinen wesentlich kürzer als die Dauer der Speicherbefüllung.

Das oben dargestellte Szenario tritt in den Wintermonaten verstärkt auf Damit ist erfindungsgemäße und subjektive vom Fahrer wahrgenommene "Regelperformance" durch Anwendung dieser neuen Verfahrensausbildung deutlich höher als bisher. Die Erhöhung der Regelperformance eines Luftfedersystems ist ein deutlicher Mehrwert für den Kunden.

Eine weitere vorteilhafte Ausbildung des Verfahrens besteht darin, dass der Kompressor bis zum Erreichen der ersten zulässigen Kompressortemperatur T_{G1} ununterbrochen betrieben wird und nach Erreichen der zweiten zulässigen Kompressortemperatur T_{G2} getaktet/intermittierend betrieben wird. Kann durch das Temperaturmodell festgestellt werden, dass die abgeschätzte Temperatur die zulässigen Kompressortemperatur T_{G2} überschreiten würde, so wird der Betrieb des Kompressors bis zum Erreichen von T_{G2} ununterbrochen durchgeführt und ab Erreichen von T_{G2} wird der Kompressor getaktet betrieben. Versuche haben überraschenderweise ergeben, dass bei getakteten Betrieb der Kompressor sich nicht wesentlich weiter erwärmt. Das hängt natürlich von der Bauart und vom Einbauort des Kompressors ab, ist aber bei vielen Ausführungen der Fall. Die genannten Versuche haben auch ergeben, dass im Hinblick auf die Betriebsfestigkeit und das Belastungskollektiv des Kompressors etwa 10% der Kompressorlaufzeit ohne Schädigung oberhalb einer zulässigen Kompressortemperatur T_{G2} von 200° C durchgeführt werden dürfen, insbesondere im intermittierenden, getakteten Betrieb.

Die Verwendung des Temperaturmodells gestattet es natürlich auch, dass in den Fällen, in denen eine Berechnung der Kompressortemperatur, die sich nach Abschließen des vom Fahrer gewünschten Regelvorganges einstellen würde, ergibt, dass die so prognostizierte Temperatur größer wird als eine vorbestimmte Abschalttemperatur, auf die Durchführung des gewünschten Regelvorganges verzichtet wird. Die Abschalttemperatur kann z.B. etwas größer als T_{G2} sein. In diesem Fall, in dem die eigentlich gewünschte Aufregelung /der gewünschte Regelvorgang nicht oder nicht komplett durchgeführt wird, kann ggf. ein vorgegebener "alternativer Regelvorgang" durchgeführt werden, der dem gewünschten möglichst nahe kommt oder der dazu führt, dass ein "Zwischenniveau" angefahren wird, bei dem das Fahrzeug direkt nach der Regelung wieder "eben" steht.

Eine weitere vorteilhafte Ausbildung des Verfahrens besteht darin, dass durch die Steuerungseinrichtung in einer Frequenz von 2 Hz abgefragt wird, ob während der Einschaltperiode des Kompressors zum Erreichen des ersten Betriebszustand B_{Z1} oder während der nachfolgenden Abkühlphase des Kompressors eine Anforderung erfolgt, den zweiten Betriebszustand B_{Z2} zu erreichen. Damit ist die Abfragefrequenz so hoch, dass der Fahrer, der einen Regelwunsch hat und entsprechend schalten will, keinerlei Verzögerung bewusst merkt.

Eine weitere vorteilhafte Ausbildung des Verfahrens besteht darin, dass der Kompressor in Abhängigkeit der im System befindlichen Luftmenge unter Vorgabe der zulässigen höheren Kompressortemperatur T_{G2} weiter betrieben oder wieder eingeschaltet wird.

Unterschreitet die Luftmenge im System einen Mindestwert, wird damit auf die Durchführung eines vom Fahrer gewünschten Regelvorganges verzichtet. Es kann nämlich vorteilhaft sein, die Systemluftmenge erst wieder auf ein Mindestmaß zu befüllen, bevor das erfindungsgemäße Verfahren, d.h. bevor eine "Laufzeitreserve" freigegeben wird. Die Druckdifferenzen zwischen Speicherdruck und Luftfederdruck beim Auf- oder Abregeln sind nämlich kleiner, wenn das System ein Mindestmaß an Systemluftmenge besitzt, im Vergleich zu einem System mit zu wenig Luftmenge. Die Erwärmung des Kompressors ist während des Regelvorganges dann nicht zu hoch und es können längere Regelvorgänge durchgeführt werden.

Der Vorteil einer solchen Ausbildung - Abhängigkeit von der im System befindlichen Luftmenge - zeigt sich auch bei Regenerationsvorgängen, die bei einer für die Erhöhung der Systemluftmenge notwendigen Speicherbefüllung durchgeführt werden. Solche Vorgänge werden dann nicht durch die Durchführung des erfindungsgemäßen Verfahrens unterbrochen.

Eine weitere vorteilhafte Ausbildung des Verfahrens besteht darin, dass der Kompressor in Abhängigkeit von der Fahrzeughöhe unter Vorgabe der zulässigen höheren Kompressortemperatur T_{G2} weiter betrieben oder wieder eingeschaltet wird.

Steht das Fahrzeug generell zu niedrig, z. B. auf der Zusatzfeder, auch Puffer genannt oder zu hoch, d.h. im Zuganschlag, so wird damit auf die Durchführung des erfindungsgemäßen Verfahrens verzichtet. Weiterhin ist es damit möglich, dass auch dann, wenn ein angeforderter Regelvorgang eine bestimmte Höhenänderung überschreitet, z. b. 20 mm nach oben oder nach unten, auf die Durchführung des erfindungsgemäßen Verfahrens verzichtet wird. Bei dieser Ausführung wird generell ausgeschlossen, dass bei einer Durchführung des erfindungsgemäßen Verfahrens ein Regelwunsch nicht zu Ende geführt werden kann. So kann z.B. eine Aufregelung aus den Puffern nach Beladewechsel einfach zu lange dauern. Bei einer Regelung von z. B. nur 20mm Verstellweg wird das System dagegen nicht unzulässig hoch belastet.

Eine Luftfederung oder Niveauregelungsanlage für ein Kraftfahrzeug mit einer Steuerungseinrichtung, welche das erfindungsgemäße Verfahren zur Steuerung durchführt, ist besonders für Personenkraftwagen, insbesondere für Kombifahrzeuge oder geeignet, bei denen ein Fahrerwunsch zur Niveauveränderung eher häufig auftritt.

## Patentansprüche

1. Verfahren zur Steuerung eines Kompressors einer Druckluftversorgung in einer Fahrzeugluftfederung, bei dem der Kompressor je nach Luftbedarf der Fahrzeugluftfederung und unter Berücksichtigung einer vorgegebenen zulässigen Kompressortemperatur T_{G} von einer Luftfedersteuerung ein und ausgeschaltet wird,
- bei dem die Kompressortemperatur in einem vorhandenen oder für einen zu erreichenden Betriebszustand B_{Z} der Fahrzeugluftfederung mit einem Temperaturmodell berechnet wird und
- bei dem der Kompressor in den Fällen, in denen die mit einem Temperaturmodell berechnete Kompressortemperatur die vorgegebene zulässige Kompressortemperatur T_{G} überschreitet, ausgeschaltet oder in einer anderen Betriebsart weiter betrieben wird,
**dadurch gekennzeichnet, dass** mindestens zwei verschiedene zulässige Kompressortemperaturen T_{G1} und T_{G2} vorgegeben werden und die zulässige Kompressortemperatur T_{G2} größer ist als die zulässige Kompressortemperatur T_{G1},
- wobei die zulässige Kompressortemperatur T_{G1} für einen ersten Betriebszustand B_{Z1} der Befüllung der Fahrzeugluftfederung und die zulässige Kompressortemperatur T_{G2} für einen weiteren Betriebszustand B_{Z2} der Befüllung der Fahrzeugluftfederung vorgegeben sind,
- wobei in dem Fall, dass der Kompressor unter Vorgabe der zulässigen Kompressortemperatur T_{G1} bereits eingeschaltet ist oder war, um den ersten Betriebszustand B_{Z1} zu erreichen und während dieser Einschaltperiode oder während einer nachfolgenden Abkühlphase des Kompressors eine Anforderung an die Fahrzeugsteuerung erfolgt, den zweiten Betriebszustand B_{Z2} zu erreichen, der Kompressor unter Vorgabe der zulässigen höheren Kompressortemperatur T_{G2} weiter betrieben oder wieder eingeschaltet wird.

2. Verfahren nach Anspruch 1, bei dem der ersten Betriebszustand B_{Z1} eine Speicherfüllung einer geschlossenen Luftfederungsanlage und der weitere Betriebszustand B_{Z2} eine Höhenänderung des Fahrzeugs ist.

3. Verfahren nach einem der Ansprüche 1 oder 2, bei dem der Betriebs des Kompressors von seinem Gegendruck und/oder vom Speicherdruck unabhängig ist.

4. Verfahren nach einem der Ansprüche 1 bis 3, bei dem die zulässige Kompressortemperatur T_{G1} für den ersten Betriebszustand B_{Z1} auf 180° C begrenzt ist.

5. Verfahren nach einem der Ansprüche 1 bis 4, bei dem die zulässige Kompressortemperatur T_{G2} für den zweiten Betriebszustand B_{Z2} auf 200° C begrenzt ist.

6. Verfahren nach einem der Ansprüche 1 bis 5, bei dem der Kompressor bis zum Erreichen der ersten zulässigen Kompressortemperatur T_{G1} ununterbrochen betrieben wird und nach Erreichen der zweiten zulässigen Kompressortemperatur T_{G2} getaktet/intermittierend betrieben wird.

7. Verfahren nach einem der Ansprüche 1 bis 6, bei dem durch die Steuerungseinrichtung in einer Frequenz von 2 Hz abgefragt wird, ob während der Einschaltperiode des Kompressors zum Erreichen des ersten Betriebszustand B_{Z1} oder während der nachfolgenden Abkühlphase des Kompressors eine Anforderung erfolgt, den zweiten Betriebszustand B_{Z2} zu erreichen.

8. Verfahren nach einem der Ansprüche 1 bis 7, bei dem der Kompressor in Abhängigkeit der im System befindlichen Luftmenge unter Vorgabe der zulässigen höheren Kompressortemperatur T_{G2} weiter betrieben oder wieder eingeschaltet wird.

9. Verfahren nach einem der Ansprüche 1 bis 8, bei dem der Kompressor in Abhängigkeit von der Fahrzeughöhe unter Vorgabe der zulässigen höheren Kompressortemperatur T_{G2} weiter betrieben oder wieder eingeschaltet wird.

10. Fahzeugluftfederung mit einer Steuerungseinrichtung, welche eine Verfahren zur Steuerung gemäß Anspruch 1 bis 9 durchführt.

## Claims

1. Method for controlling a compressor of a compressed air supply in a vehicle pneumatic suspension, in which method the compressor is switched on and off by a pneumatic suspension control according to the air requirement of the vehicle pneumatic suspension and taking into consideration a predetermined permissible compressor temperature T_{G},
- in which method the compressor temperature is calculated using a temperature model in an existing operating state B_{Z} of the vehicle pneumatic suspension or for an operating state B_{Z} of the vehicle pneumatic suspension to be achieved, and
- in which method the compressor is switched off or continues to be operated in a different mode of operation in the cases in which the compressor temperature that is calculated using a temperature model exceeds the predetermined permissible compressor temperature T_{G},
**characterized in that** at least two different permissible compressor temperatures T_{G}, and T_{G2} are predetermined and the permissible compressor temperature T_{G2} is greater than the permissible compressor temperature T_{G1},
- wherein the permissible compressor temperature T_{G1} is predetermined for a first operating state B_{Z1} of filling the vehicle pneumatic suspension and the permissible compressor temperature T_{G2} is predetermined for an additional operating state B_{Z2} of filling the vehicle pneumatic suspension,
- wherein in the case that the compressor is or has been already switched on whilst pre-setting the permissible compressor temperature T_{G1} in order to achieve the first operating state B_{Z1} and during this switched-on period or during a subsequent cooling phase of the compressor a request is sent to the vehicle control to achieve the second operating state B_{Z2}, the compressor continues to be operated or is switched back on whilst pre-setting the permissible higher compressor temperature T_{G2}.

2. Method according to Claim 1, in which the first operating state B_{Z1} is filling the reservoir of a closed pneumatic suspension system and the additional operating state B_{Z2} is adjusting the ride height of the vehicle.

3. Method according to any one of Claims 1 and 2, in which the operation of the compressor is independent of its counter pressure and/or of the reservoir pressure.

4. Method according to any one of Claims 1 to 3, in which the permissible compressor temperature T_{G1} for the first operating state B_{Z1} is limited to 180°C.

5. Method according to any one of Claims 1 to 4, in which the permissible compressor temperature T_{G2} for the second operating state B_{Z2} is limited to 200°C.

6. Method according to any one of Claims 1 to 5, in which the compressor is operated uninterrupted until the first permissible compressor temperature T_{G1} is achieved and once the second permissible compressor temperature T_{G2} is achieved it is operated in a cyclic/intermittent manner.

7. Method according to any one of Claims 1 to 6, in which an enquiry is made by means of the control device at a frequency of 2 Hz as to whether, during the switched-on period of the compressor in order to achieve the first operating state B_{Z1} or during the subsequent cooling phase of the compressor, a request is made to achieve the second operating state B_{Z2}.

8. Method according to any one of Claims 1 to 7, in which the compressor continues to be operated or is switched back on in dependence upon the volume of air located in the system whilst pre-setting the permissible higher compressor temperature T_{G2}.

9. Method according to any one of Claims 1 to 8, in which the compressor continues to be operated or is switched back on in dependence upon the ride height of the vehicle whilst pre-setting the permissible higher compressor temperature T_{G2}.

10. Vehicle pneumatic suspension having a control device which performs a method for controlling in accordance with Claims 1 to 9.

## Revendications

1. Procédé de commande d'un compresseur d'une alimentation en air comprimé dans une suspension pneumatique d'un véhicule, dans lequel le compresseur est mis en circuit et déconnecté par une commande de ressort pneumatique selon les besoins en air de la suspension pneumatique du véhicule et en tenant compte d'une température admissible prédéfinie du compresseur T_{G},
- dans lequel la température du compresseur est calculée avec un modèle de température dans un état de fonctionnement existant ou pour un état de fonctionnement devant être atteint B_{Z} de la suspension pneumatique du véhicule et
- dans lequel le compresseur, dans les cas dans lesquels la température du compresseur calculée avec un modèle de température dépasse la température admissible prédéfinie T_{G} du compresseur, est déconnecté ou continue de fonctionner dans un autre mode de fonctionnement,
**caractérisé en ce qu'**au moins deux températures admissibles différentes du compresseur T_{G}, et T_{G2} sont prédéfinies et la température admissible du compresseur T_{G2} est supérieure à la température admissible du compresseur T_{G1},
- la température admissible du compresseur T_{G1} étant prédéfinie pour un premier état de fonctionnement B_{Z1} de remplissage de la suspension pneumatique du véhicule et la température admissible du compresseur T_{G2} étant prédéfinie pour un autre état de fonctionnement B_{Z2} de remplissage de la suspension pneumatique du véhicule,
- et au cas où le compresseur est déjà ou était déjà mis en circuit avec une valeur prédéfinie de la température admissible du compresseur T_{G1}, afin d'obtenir le premier état de fonctionnement B_{Z1} et que pendant cette période de mise en circuit ou pendant une phase de refroidissement subséquente du compresseur, a lieu une demande de commande du véhicule pour atteindre le deuxième état de fonctionnement B_{Z2}, le compresseur continue de fonctionner ou est à nouveau mis en circuit avec la valeur prédéfinie de la température admissible plus élevée du compresseur T_{G2}.

2. Procédé selon la revendication 1, dans lequel le premier état de fonctionnement B_{Z1} est un remplissage d'un accumulateur d'une installation de suspension pneumatique fermée et l'état de fonctionnement supplémentaire B_{Z2} est une variation de hauteur du véhicule.

3. Procédé selon l'une quelconque des revendications 1 ou 2, dans lequel le fonctionnement du compresseur est indépendant de sa contrepression et/ou de la pression de l'accumulateur.

4. Procédé selon l'une quelconque des revendications 1 à 3, dans lequel la température admissible du compresseur T_{G1} pour le premier état de fonctionnement B_{Z1} est limitée à 180°C.

5. Procédé selon l'une quelconque des revendications 1 à 4, dans lequel la température admissible du compresseur T_{G2} pour le deuxième état de fonctionnement B_{Z2} est limitée à 200°C.

6. Procédé selon l'une quelconque des revendications 1 à 5, dans lequel le compresseur fonctionne de manière ininterrompue jusqu'à ce que la première température admissible du compresseur T_{G1} soit atteinte et une fois la deuxième température admissible du compresseur T_{G2} atteinte, fonctionne de manière cadencée/intermittente.

7. Procédé selon l'une quelconque des revendications 1 à 6, dans lequel le dispositif de commande demande, dans une fréquence de 2 Hz, si pendant la période de mise en circuit du compresseur pour atteindre le premier état de fonctionnement B_{Z1} ou pendant la phase de refroidissement subséquente du compresseur, une demande d'atteindre le deuxième état de fonctionnement B_{Z2} est créée.

8. Procédé selon l'une quelconque des revendications 1 à 7, dans lequel le compresseur, en fonction de la quantité d'air dans le système, continue de fonctionner ou est à nouveau mis en circuit avec une valeur prédéfinie de la température plus élevée admissible du compresseur T_{G2}.

9. Procédé selon l'une quelconque des revendications 1 à 8, dans lequel le compresseur, en fonction de la hauteur du véhicule, continue de fonctionner ou est à nouveau mis en circuit avec une valeur prédéfinie de la température plus élevée admissible du compresseur T_{G2}.

10. Suspension pneumatique de véhicule comprenant un dispositif de commande qui met en oeuvre un procédé de commande selon les revendications 1 à 9.
